(19) Europäisches Patentamt

**European Patent Office**

**Office européen des brevets**

(11) Veröffentlichungsnummer: **0 296 460 B1**

(12) **EUROPÄISCHE PATENTSCHRIFT**

(45) Veröffentlichungstag der Patentschrift: **25.03.92**

(21) Anmeldenummer: **88109448.6**

(22) Anmeldetag: **14.06.88**

(51) Int. Cl.⁵: **B23B 29/034**

(54) Werkzeug zur umfangsschneidenden Bearbeitung von Werkstücken, insbesondere zum Bohren.

(30) Priorität: **23.06.87 DE 3720630**

(43) Veröffentlichungstag der Anmeldung:
**28.12.88 Patentblatt 88/52**

(45) Bekanntmachung des Hinweises auf die
Patenterteilung:
**25.03.92 Patentblatt 92/13**

(84) Benannte Vertragsstaaten:
**AT BE CH DE ES FR GB IT LI NL SE**

(56) Entgegenhaltungen:
**DE-A- 1 402 911**
**DE-A- 2 715 234**
**DE-B- 1 477 114**
**US-A- 4 105 360**

(73) Patentinhaber: **Bauer, Walter**
**Weidenstrasse 15**
**W-7403 Ammerbuch 1(DE)**

(72) Erfinder: **Bauer, Walter**
**Weidenstrasse 15**
**W-7403 Ammerbuch 1(DE)**

(74) Vertreter: **Wilhelm, Hans-Herbert, Dr.-Ing. et al**
**Wilhelm & Dauster Patentanwälte Hospital-**
**strasse 8**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Werkzeug zur umfangsschneidenden Bearbeitung von Werkstücken, insbesondere zum Bohren, nach dem Oberbegriff des Patentanspruches 1.

Werkzeuge dieser Art sind bekannt (DE-OS 14 02 911). Bei diesen Bauarten ist die die Bearbeitung durchführende Schneide exzentrisch zur Drehachse des Bohrfutters gelagert. Der Exzenter wird durch eine Feder gegen einen Anschlag gedrückt, an dem er während der Vorschubbewegung des Werkzeuges für das Bohren anliegt. Dies wird zum einen in der Ausgangsstellung bewirkt durch die Andrückfeder, zum anderen während der Bearbeitung durch das zusätzlich von der beim Zerspanen auftretenden Kraft bewirkte Drehmoment auf den Exzenter. Ist der Bohrvorgang, d.h. die Schruppbearbeitung, beendet, dann kann durch eine zentrisch im Bohrfutter geführte Verstellspindel der Exzenter entgegen der Wirkung seiner Rückstellfeder verdreht werden, und zwar so, daß die Schneide dann auf einen größeren Durchmesser um die Bohrfutterachse umläuft. Während des Zurückziehens des Bohrwerkzeuges kann daher bei den bekannten Bauarten die Schlichtbearbeitung auf einen etwas größeren Durchmesser erfolgen und es wird gleichzeitig vermieden, daß beim Zurückziehen des Werkzeuges eine Schneidenkante eine unerwünschte wendelförmige Riefe in der hergestellten Bohrung hinterläßt.

Bei anderen Bauarten (DE-OS 27 15 234) ist es auch bekannt, die Schneide eines Bohrwerkzeuges nach Beendigung des Bearbeitungsvorganges in eine Radialstellung zurückzufahren, in der eine Berührung der fertig bearbeiteten Innenfläche der Bohrung durch die Schneide beim Zurückziehen des Werkstückes nicht möglich ist.

Muß aber vor der Endbearbeitung eine Schruppbearbeitung vorgenommen werden, so muß das Werkzeug neu eingestellt oder ausgewechselt und erneut in die Bohrung vorgeschoben werden. Dies ist aufwendig.

Der Erfindung liegt daher die Aufgabe zugrunde, ein Werkzeug zur umfangsschneidenden Bearbeitung der eingangs genannten Art so auszubilden, daß die Vorschub- und die Rückzugbewegung des Werkzeuges zur Bearbeitung ausgenutzt werden kann, ohne daß jedoch eine mechanische Verstellvorrichtung notwendig wird.

Zur Lösung dieser Aufgabe werden bei einem Werkzeug der eingangs genannten Art die kennzeichnenden Merkmale des Patentanspruchs 1 vorgesehen. Die Erfindung geht von der Erkenntnis aus, daß beim Schruppen und beim Schlichten unterschiedliche Zerspankräfte auftreten, die um Größenordnungen voneinander verschieden sind. Diese unterschiedlichen Kräfte und die von diesen ausgelösten Drehmomente nützt die Erfindung dazu aus, um eine selbständige Verstellung der Schneide eines Bohrwerkzeuges zu erreichen, das somit automatisch den Bohrvorgang und, beim Zurückziehen einen Feinbearbeitungsvorgang ausführen kann. Analog könnte auch ein Werkzeug zur Bearbeitung zylindrischer Außenflächen ausgelegt werden.

Vorteilhafte Weiterbildungen der Erfindung sind in den Unteransprüchen gekennzeichnet. Die Ansprüche 5 und 6 umreißen dabei zwei verschiedene Realisierungsmöglichkeiten.

In der Zeichnung sind vorteilhafte Ausführungsbeispiele der Erfindung dargestellt und im nachfolgenden beschrieben. Es zeigen:

Fig. 1      einen schematischen Längsschnitt durch ein Bohrfutter gemäß der Erfindung, bei dem das Bohrwerkzeug an einem Exzenter innerhalb des Bohrfutters angebracht ist,

Fig. 2      den Schnitt durch die Ausführungsform der Fig. 1 längs der Linie II-II,

Fig. 3      eine schematische Darstellung der durch die Exzenterverdrehung bewirkbaren unterschiedlichen Lagen der Schneide,

Fig. 4      eine schematische Vorderansicht eines erfindungsgemäß ausgebildeten Brückenwerkzeuges, in Richtung des Pfeiles IV der Fig. 5,

Fig. 5      eine schematische Seitenansicht des Werkzeuges der Fig. 4, teilweise geschnitten,

Fig. 6      eine Darstellung ähnlich Fig. 3, jedoch für das in den Fig. 4 und 5 dargestellte Brückenwerkzeug,

Fig. 7      eine schematische Darstellung ähnlich Fig. 3, jedoch für ein Werkzeug ähnlich Fig. 1, das mit zwei gegenüberliegenden Schneiden ausgerüstet ist,

Fig. 8      eine vergrößerte und schematische Darstellung der Eingriffsbereiche der Schneiden der Fig. 7 beim Schruppvorgang und

Fig. 9      eine vergrößerte Darstellung ähnlich Fig. 8, jedoch mit einer abgewandelten Ausführungsform der beim Schlichten zum Einsatz kommenden Schneide.

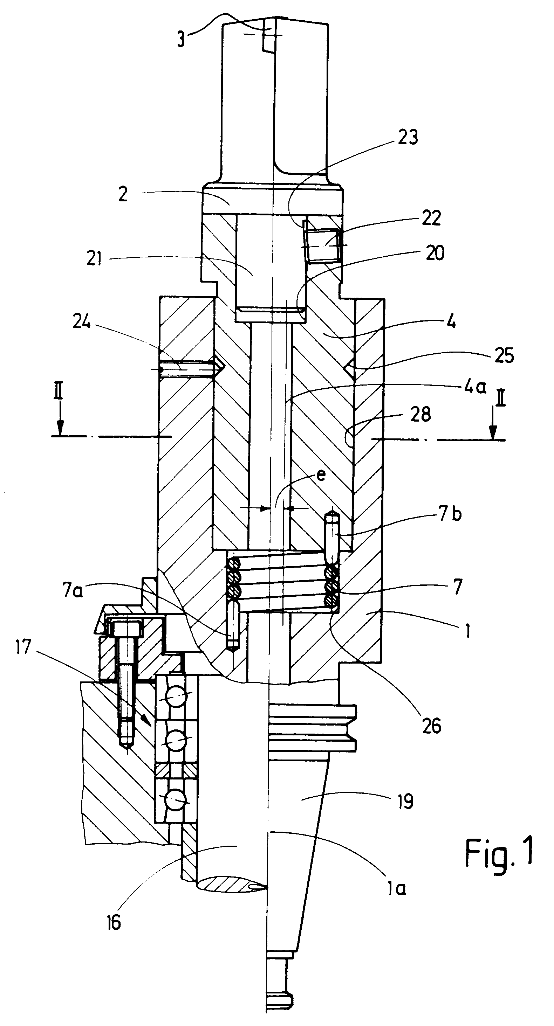

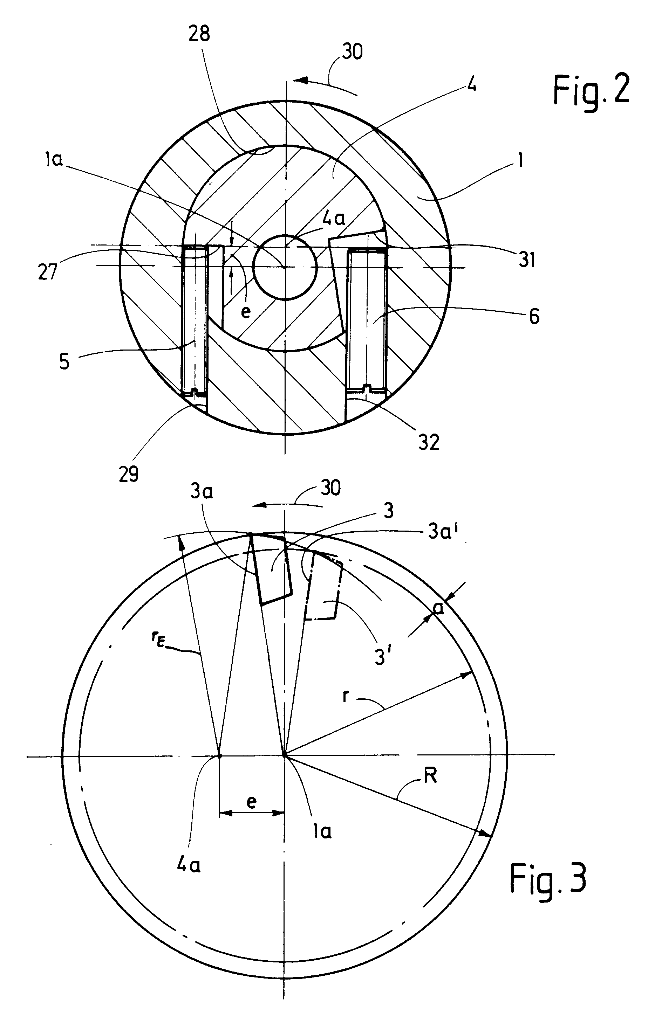

In den Fig. 1 und 2 ist ein Bohrfutter (1) gezeigt, das in an sich bekannter Weise - wie in der linken Hälfte der Fig. 1 gezeigt - über eine zylindrische Welle (16) mit einem nicht gezeigten Antrieb verbunden und in einer Lagerung (17) einer nicht gezeigten Bearbeitungsmaschine angeordnet ist. Das Bohrfutter (1)

2

kann aber auch - wie die rechte Hälfte von Fig. 1 zeigt - mit einem Befestigungskonus (19) versehen sein, der ebenfalls in bekannter Weise in einer entsprechenden Aufnahme einer Bearbeitungsmaschine befestigbar ist.

In dem Bohrfutter (1) ist ein als Exzenterhülse (4) ausgebildeter Exzenter gelagert, dessen Mittelachse (4a) parallel zur Drehachse (1a) des Bohrfutters (1) angeordnet ist, aber um den Betrag (e) exzentrisch zu dieser verläuft. In der Exzenterhülse (4), deren Bohrung in bekannter Weise auch zur Kühlmittelzufuhr zum Betriebswerkzeug (2) benutzt werden kann, ist ein Bohrwerkzeug (2), das handelsüblich sein kann, in einer Aufnahmebohrung (20) mit einem zylindrischen Zapfen (21) gehalten, an dem eine Klemmschraube (22) angreift, die gegen eine leicht gegenüber der Drehachse (1a) geneigten Fläche (23) des Zapfens (21) anliegt. An dem von dem Zapfen (21) abgewandten Ende des Bohrwerkzeuges (2) ist eine als Platte ausgebildete Schneide (3) fest angeordnet. Anstelle einer Schneide können auch zwei-oder mehrere Schneiden vorgesehen werden. Hierauf wird noch eingegangen.

Die Exzenterhülse (4) ist axial innerhalb des Bohrfutters (1) durch eine Sicherungsschraube (24) gehalten, die in eine umlaufende Nut (25) in der Exzenterhülse eingreift. Eine Wendelfeder (7) ist mit ihrem einen Ende (7a) fest im Bohrfutter (1) gehalten, in einer Ausnehmung (26) geführt und mit ihrem anderen Ende (7b) fest mit der Exzenterhülse (4) verbunden. Die Wendelfeder (7) ist so ausgebildet und angeordnet, daß sie die Exzenterhülse (4), wie aus Fig. 2 ersichtlich ist, im Gegenuhrzeigersinn verdreht und sie mit einer Anschlagfläche (27) gegen die in das Innere der zylindrischen Führung (28) hereinragenden Anschlagschraube (5) drückt, die von außen durch eine Gewindebohrung (29) im Bohrfutter (1) hindurchgreift. Sie drückt dabei die Exzenterhülse (4) in der Antriebsrichtung (30) des Werkzeuges, die ebenfalls im Gegenuhrzeigersinn erfolgt, gegen die Anschlagschraube (5). Die Exzenterhülse (4) besitzt eine zweite Anschlagfläche (31), die mit einer zweiten Anschlagschraube (6) in Eingriff kommen kann, die ebenfalls von außen durch eine Gewindebohrung (32) im Bohrfutter (1) hindurchgreift. Diese Anschlagschraube (6) weist einen größeren Durchmesser als die Anschlagschraube (5) auf. Sie hat, worauf noch eingegangen werden wird, größere Kräfte aufzunehmen.

Wie anhand der Fig. 3 deutlich wird, wird bei einer Drehung des Werkzeuges der Fig. 1 und 2 in Richtung des Pfeiles (30), d.h. im Gegenuhrzeigersinn, die mit der Exzenterhülse (4) fest verbundene Schneide (3) beim Eingriff in das Werkstück von einer entgegen der Drehrichtung (30) wirkenden Kraft beaufschlagt, die bestrebt ist, die Exzenterhülse um ihre Achse (4a) im Uhrzeigersinn zu verschwenken. Durch eine solche Verschwenkung würde die Schneide (3) aus der in der Fig. 3 ausgezogen gezeichneten Lage, in der ihre äußerste Schneidkante auf dem Radius (R) liegt, in die zurückgeschwenkte Lage (3'), in der ihre äußere Schneidkante auf den kleineren Radius (r) gelangt. Die Anordnung der Schneide (3) am Exzenter (4) muß dabei so erfolgen, daß ihre in Schneidrichtung weisende Fläche (3a) in beiden Endstellungen, d.h. in der Lage (3) und in der Lage (3') jeweils nahe den Radialebenen zur Drehachse (1a) des Bohrkopfes liegt. Die geringfügigen Abweichungen der Fläche (3a) zu den Radialebenen sind für die Praxis ohne Bedeutung.

Die in der Fig. 3 ausgezogen gezeichnete Stellung der Schneide (3) entspricht beim Ausführungsbeispiel der in der Fig. 2 dargestellten Lage der Exzenterhülse (4) innerhalb des Bohrfutters (1). Sie stellt die Lage dar, in der die Schneide (3) mit ihrer äußersten Schneidkante auf dem größeren Radius (R) liegt, welche dem Bearbeitungsradius für das Schlichten entspricht. Die Lage (3') der Schneide (3) ist dann gegeben, wenn die Exzenterhülse (4) aus der in der Fig. 2 gezeigten Lage im Uhrzeigersinn an die Stirnfläche der Anschlagschraube (6) gedrückt ist. Diese Stellung entspricht daher der Schruppbearbeitung.

Die Kraft der Wendelfeder (7) ist so ausgelegt, daß sie bei den gegebenen Abmessungen der Exzenterhülse (4) nur ein Drehmoment erzeugen kann, welches wesentlich kleiner ist als das bei der Schruppbearbeitung wirkende, d.h. das beim Ausführungsbeispiel beim Bohrvorschub auftretende, im Uhrzeigersinn wirkende Drehmoment, das sich aus der Krafteinwirkung an der Schneide (3) und dem nährungsweise als Radius (R) angesetzten Radialabstand von der Drehachse (1a) ergibt. Die Kraft der Wendelfeder (7) ist aber andererseits so groß ausgelegt, daß das von ihr im Gegenuhrzeigersinn, d.h. auch in Drehrichtung (30) bewirkte Drehmoment ausreichend größer ist, als das bei der beim Zurückziehen des Bohrwerkzeuges erfolgenden Schlichtbearbeitung auftretende Drehmoment. Dieses beim Schlichtvorgang auftretende Drehmoment ist, wie noch ausgeführt werden wird, wegen der dann wesentlich geringeren Spanstärke auch um Größenordnungen kleiner, als das Drehmoment bei der Schruppbearbeitung. Das neue Werkzeug wird daher, wenn der Bohrvorgang mit der größeren Spanabnahme beendet ist, während dem die Exzenterhülse (4) noch an der Anschlagschraube (6) anliegt und die Schneide die Lage (3') einnimmt, beim Weiterdrehen des Werkzeuges selbsttätig durch die Kraft der Wendelfeder in die in der Fig. 2 gezeigte Lage zurückgedreht. Die Schneide (3) liegt dann auf dem größeren Radius (R) und führt die Schlichtbearbeitung während des Zurückziehens des Werkzeuges durch, ohne daß hierzu von außen eingegriffen werden muß.

3

Zur Verdeutlichung der auftretenden Kräfte sei eine beispielhafte Berechnung der Schnittdrehmomente aufgeführt, die am Beispiel einer Bohrung in Stahlguß (GS 52) mit vorgegossenem Loch von 23 mm Durchmesser und unter Verwendung eines einschneidigen Werkzeuges (Bohrstange) erläutert werden soll. Das Loch mit einem Durchmesser von 23 mm soll auf einem Durchmesser von 29,6 mm beim Bohrvorschub geschruppt und beim Rückhub des Bohrwerkzeuges auf 30 mm Durchmesser geschlichtet werden. Dabei sollen die Mittelachsen der Drehbewegung (die Drehachse 1a des Bohrfutters 1) und der Schwenkbewegung des Exzenters (die Exzenterachse 4a der Exzenterhülse 4) nur wenig auseinanderliegen (e = 3 mm) und die Schneidenanordnung soll im Prinzip der Fig. 3 entsprechen. Für die Schnittkraftberechnung, die stets nur eine annähernde Berechnung sein kann, da nur ein Teil der Parameter erfaßbar ist, gelten folgende allgemein gültige Formeln.

$$F_c = k_c \cdot A$$

$$A = s \cdot a$$

$$M_D = r_E \cdot F_c = r_E \cdot k_c \cdot s \cdot a$$

Verwendete Formelzeichen und Einheiten

| Größe | Einheit | Benennung |
|---|---|---|
| $F_c$ | N | Schnittkraft |
| $k_c$ | N/mm$^2$ | spezifische Schnittkraft |
| A | mm$^2$ | Spanungsquerschnitt |
| s | mm | Vorschub pro Umdrehung |
| a | mm | Schnitt-Tiefe |
| $M_D$ | Nm | Drehmoment bezüglich der Achse des Exzenters |
| $r_E$ | mm | Radialer Abstand des Mittelpunkts des Spanungsquerschnitts von der Mittelachse des Exzenters |

Angewendet auf das gewählte Beispiel gilt für das Schruppen:

$$r_E = \frac{29,6 \text{ mm}}{2} - \frac{(29,6 - 23) \text{ mm}}{4} = 13,15 \text{ mm}$$

$k_c$ (Schruppen) = 2320 N/mm$^2$
s = 0,2 mm/U
a = 3,3 mm
$M_D$ (Schruppen) = 13,15 mm . 2320 N/mm$^2$ . 0,2 mm . 3,3 mm
= 20,135 Nm

Angewendet auf das gewählte Beispiel gilt für das Schlichten:

$$r_E = \frac{30 \text{ mm}}{2} - \frac{(30 - 29,6) \text{ mm}}{4} = 14,9 \text{ mm}$$

$k_c$ (Schlichten) = 2600 N/mm$^2$
s = 0,1 mm/U
a = 0,2 mm
$M_D$ (Schlichten) = 14,9 mm . 2600 N/mm$^2$ . 0,1 mm . 0,2 mm
= 0,775 Nm

Vergleich

4

$$\frac{M_D \text{ (Schruppen)}}{M_D \text{ (Schlichten)}} = \frac{20,135 \text{ Nm}}{0,775 \text{ Nm}} = 26$$

Wenn die Feder ein Drehmoment von etwa 4 Nm erzeugt, ist sichergestellt, daß das Drehmoment zum Schlichten weniger als ein Fünftel des Feder-Drehmoments und das Schrupp-Drehmoment mehr als dessen Fünffaches beträgt, also ein jeweils deutlicher Unterschied besteht.

Aus diesem Vergleich ergibt sich, daß die erfindungsgemäß ausgenützten unterschiedlichen Drehmomente um mehr als das 20fache verschieden sind. Die Wahl der Federkraft kann daher so erfolgen, daß der gewünschte automatische Umschaltvorgang von Schrupp- auf Schlichtbearbeitung selbsttätig ausgelöst wird.

Anstelle des in Fig. 1 gezeigten Bohrwerkzeuges (2) mit einer innen angreifenden Schneide könnte auch ein glockenförmig ausgebildetes Werkzeug zur Bearbeitung zylindrischer Außenflächen vorgesehen werden. Die Schneide muß dabei so angeordnet werden, daß sie bei dem exzentrischen Schwenkvorgang zur Schlichtbearbeitung auf einen kleineren Radius einschwenkt.

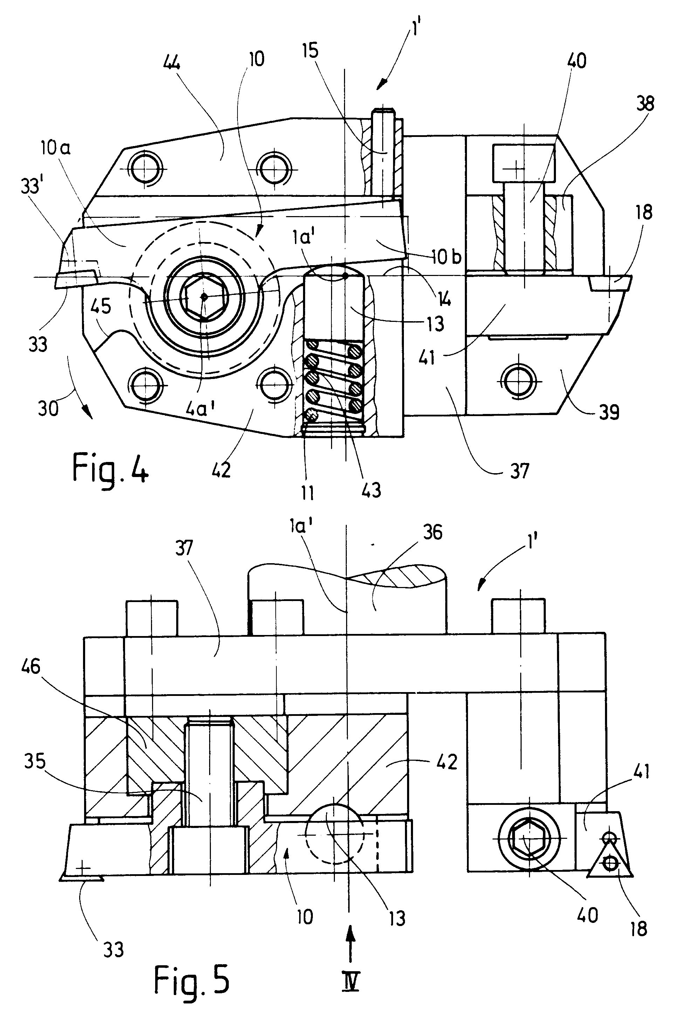

In den Fig. 4 bis 6 ist ein anderes Ausführungsbeispiel gezeigt, bei dem die Schneide (33) nicht an einer Exzenterhülse, sondern an einer exzentrisch zu der Drehachse (1a') des Bohrwerkzeuges (1') angeordneten Wippe (10) angebracht ist. Die Wippe (10) ist dabei um die Exzenterachse (4a') schwenkbar. Sie wird mit einer Schraube (35) an einem zylindrischen Lagerstück (46) befestigt und mit diesem schwenkbar an dem Bohrwerkzeug (1') gehalten, das aus einem fest mit einer Antriebswelle (36) verbundenen Träger (37) besteht, an dem nach unten abragende Spannklötze zum Befestigen der mit der Wippe verbundenen Schneide (33) und einer weiteren Schneide (18) angeordnet sind, die aber fest zwischen den beiden Klemmbacken (38 und 39) mit Hilfe einer Klemmschraube (40) eingespannt ist, die auf den Schneidenträger (41) wirkt, an dem die als Platte ausgebildete Schneide (18) befestigt ist. Die äußerste Kante der Schneide (18) liegt dabei auf einem Radius, der dem Radius entspricht, die die äußerste Kante der Schneide (33) der Wippe (10) in der Stellung (33') einnimmt. Diese Stellung entspricht, analog zu den Fig. 1 bis 3, der Schruppbearbeitung. In dieser Stellung liegt der rechte Arm (10b) der Wippe (10) an der Fläche (14) des Befestigungsbackens (42) an. In der ausgezogen gezeichneten Stellung liegt die Schneide (33) auf dem größeren Radius, in der sie durch die Einwirkung einer Schraubendruckfeder (11) gehalten ist, die in einer Bohrung (43) des Backens (42) gehalten ist und einen Bolzen (13) gegen den rechten Arm (10b) der Wippe drückt. Dieser rechte Arm (10b) der Wippe wird dabei bis zum Anschlag an einer Stellschraube (15) gedrückt, die an den den Backen (42) gegenüberliegenden Backen (44) angeordnet ist. Die beiden Arme (10a und 10b) der Wippe (10) verlaufen daher zwischen den beiden Backen (42 und 44). Der linke Arm (10a) der Wippe mit der Schneide (33) bildet mit einer Aussparung (45) am Backen (42) eine Spanabfuhröffnung.

Je nach den auf die Schneide (33) ausgeübten Zerspanungskräften wird daher, analog dem Ausführungsbeispiel der Fig. I bis 3, bei einer Drehung des Werkzeuges (1') im Sinn des Pfeiles (30) die Schneide die Stellung (33) einnehmen oder die Lage (33') je nachdem, ob die Schruppbearbeitung oder Schlichtbearbeitung stattfindet. Auch in diesem Fall wird die Feder (11) so ausgelegt, daß das von ihr auf die Wippe (10) im Gegenuhrzeigersinn - und in Drehrichtung (30) - ausgeübte Drehmoment größer ist, als das im Uhrzeigersinn wirkende, von den Zerspanungskräften beim Schlichten hervorgerufene Drehmoment. Die Feder wird dabei auch so ausgelegt, daß das von ihr auf die Wippe (10) ausgeübte Drehmoment kleiner ist, als das bei der Schruppbearbeitung im Uhrzeigersinn wirkende Drehmoment. Die Wippe (10) schlägt dann mit ihrem Arm (10b) an der Fläche (14) an.

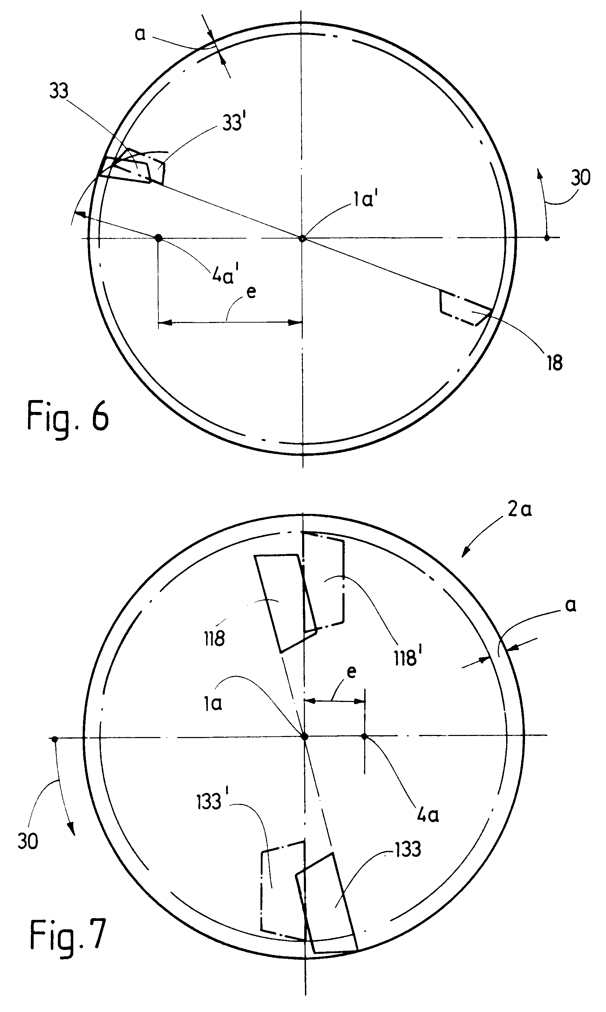

In der Fig. 7 sind schematisch die Verhältnisse dargestellt, die sich bei der Anordnung von zwei Schneiden (118 und 133) an einem Werkzeug (2a) ergeben, das dem Werkzeug (2) der Fig. 1 im wesentlichen entspricht. Wie aus Fig. 7 zu entnehmen ist, sind die beiden Schneiden (118 und 133) um 180° zueinander versetzt. Bezüglich der Schneide (133), die durch das Verschwenken des Exzenters um die Achse (4a) in die Stellung zur Schlichtbearbeitung kommt, liegen die auch in Fig. 3 gezeigten Verhältnisse vor. Die zweite Schneide (118) dagegen wird für den Schlichtvorgang auf einen kleineren Radius eingeschwenkt und nimmt daher nicht an der Schlichtbearbeitung teil.

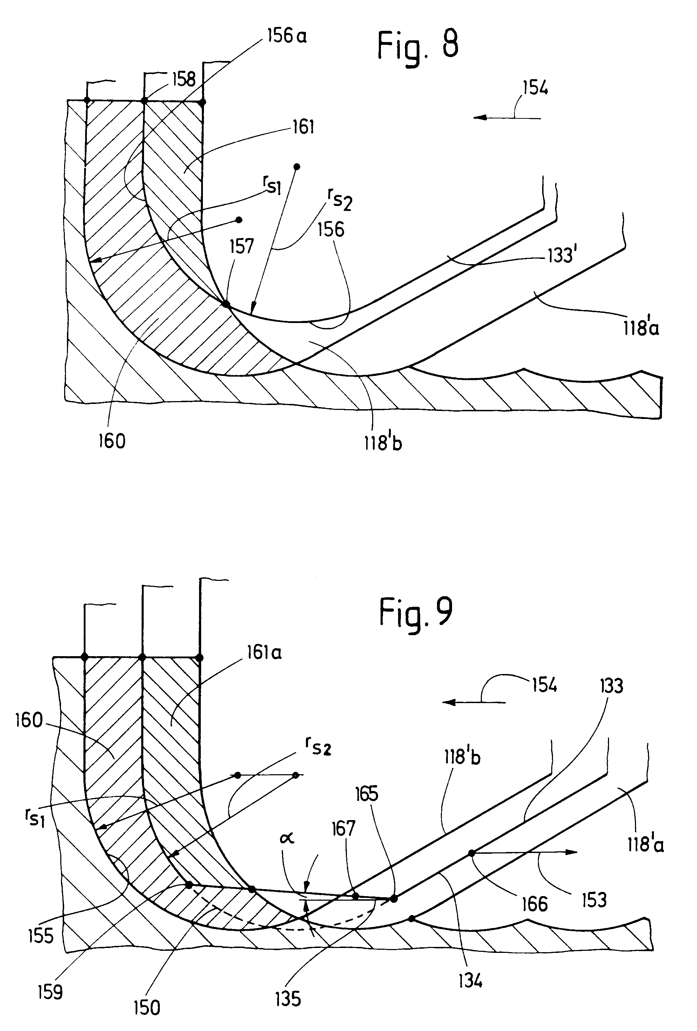

Bei der Schruppbearbeitung befinden sich die beiden Schneiden (118 und 133) jeweils in der Lage (118' und 133'). Die Schneide (133') ist dabei um ein kleines Maß mit ihrer Außenschneidkante radial nach innen versetzt, wie dies aus Fig. 8 zu erkennen ist, in der die Schneide (118), die bei dem Schruppvorschub in der Richtung (154) bei einer Umdrehung von der Lage (118'a) in die Lage (118'b) gelangt und dabei den Spanungsquerschnitt (160) abnimmt, mit ihrem Schneideneckenradius ($r_{S1}$) radial weiter ausliegt, als die Schneide (133') mit ihrem Schneideneckenradius ($r_{S2}$). Beim Vorschub in Richtung (154) wird daher nur ein Teilbereich der Schneidenkante (156), nämlich der zwischen den Eingriffspunkten (157 und 158) liegende Bereich (156a) der Schneidenkante (156) der Schneide (133') beansprucht. Der später bei der Rückbewegung in Richtung (153) (Fig. 9) und beim Schlichtvorgang in der Stellung (133) (Fig. 7) wirksam werdende Teil der Schneidenkante (156) kommt daher nur beim Schlichtvorgang in Einsatz. Die Schneidenkante erhält dadurch eine längere Standzeit. Ein Werkzeugwechsel ist nicht so oft notwendig. Aus Fig. 7 wird überdies deutlich, daß die Schneide (118) beim Schlichtvorgang gar nicht in Eingriff kommt. Sie übernimmt, wie anhand von Fig. 8 ausgeführt wurde, den größeren Teil der Schruppbearbeitung.

Die Fig. 9 zeigt eine Darstellung ähnlich Fig. 8. Auch hier nimmt die Schneide (118') bei der Schruppbearbeitung und beim Vorschub in Richtung (154) den Querschnitt (160) ab, während die zweite Schneide (133), da sie radial mit ihrer Außenkante zurückversetzt ist, nur den Querschnitt (161a) abnimmt. Die Schneidkante (134) der Schneide (133) ist bei diesem Ausführungsbeispiel aber insofern abgewandelt, als hier der Schneideneckenradius ($r_{S2}$) der Schneide (133) nur bis zum Punkt (159) verläuft. Von hier an ist die Schneideneckenkante (150), die gestrichelt angedeutet ist, durch eine gerade verlaufende, vom Punkt (159) zum Punkt (165) führende Linie abgekappt, die unter einem kleinen Winkel ($\alpha$) gegenüber einer Parallelebene zur Vorschubrichtung (153) vom Punkt (165) aus schräg nach hinten zum Punkt (159) ansteigt. Durch diese Ausgestaltung erhält die Schneidkante der Schneide (133) zwischen den Punkten (166 und 165) eine gerade verlaufende Schlichtschneide und zwischen den Punkten (165 und 167) eine ebenfalls gerade verlaufende Nebenschneide (135). Dieser Bereich der Schneidkante zum Schlichten kann als möglichst scharfe Schneidkante ausgebildet sein. Ansonsten kann die Ausbildung wie bei einer bekannten Schlichtschneide gewählt sein. Der Bereich zum Schruppen am dem Punkt (159) kann mit einer Kantenverrundung oder mit einer Fase wie bei üblichen Schruppschneiden ausgebildet sein.

Bei der Ausgestaltung nach Fig. 9 ist es im Gegensatz zu der in der Fig. 7 dargestellten Ausführung, nicht notwendig, daß die Schneide (133) in ihrer Lage bei der Schruppbearbeitung radial gegenüber der Schneide (118') zurückversetzt ist. Die Zurückversetzung der Außenkante ergibt sich bei dieser Lösung durch das Abkappen des gestrichelt gezeichneten Teiles des Schneideneckenradius (150). Der Vorteil, daß die bei der Rückbewegung in Richtung (153) aktiv werdende Schlichtschneide (134) einschließlich ihrer Nebenschneide (135) beim Schruppvorgang vollkommen außer Eingriff ist, bleibt auch bei dieser Ausführung bestehen. Analog gilt dies auch bei einem Werkzeug zur Bearbeitung zylindrischer Außenflächen.

**Patentansprüche**

1.  Werkzeuganordnung zur Bearbeitung zylindrischer Flächen an Werkstücken, insbesondere zum Ausbohren, mit einem exzentrisch zur Drehachse (1a) eines Werkzeughalters, insbesondere eines Bohrfutters (1), gelagerten Exzenter (4), der ein Bearbeitungswerkzeug (2) trägt und dessen Schneide (3) durch Verstellen des Exzenters zwischen zwei Anschlägen (5, 6; 15, 14) in eine Vorbearbeitungsstellung und - beim Zurückziehen der Werkzeuganordnung - in eine Schlichtstellung überführbar ist, wobei der Exzenter durch eine Feder (7, 11) mit einem Drehmoment in Richtung auf den einen der beiden Anschläge vorgespannt ist, dadurch gekennzeichnet, daß dieser eine Anschlag (5, 15) der Schlichtstellung der Schneide (3, 33) entspricht und daß das Drehmoment der Feder (7, 11) größer ist als das beim Schlichten auftretende, aber kleiner als das bei der Vorbearbeitung auftretende Gegendrehmoment.

2.  Werkzeug nach Anspruch 1, dadurch gekennzeichnet, daß die Kraft der Feder (7, 11) einstellbar ist.

3.  Werkzeug nach den Ansprüchen 1 oder 2, dadurch gekennzeichnet, daß die Lage der Anschläge (5, 6, 15) für den Exzenter (4, 10) einstellbar ist.

4.  Werkzeug nach den Ansprüchen 1 bis 3, dadurch gekennzeichnet, daß die Anschläge (5, 6) von Stellschrauben (8, 9) gebildet sind, die in Gewindebohrungen im Bohrfutter (1) eingeschraubt sind.

5.  Werkzeug nach Anspruch 1, dadurch gekennzeichnet, daß der Exzenter (4) um eine Exzenterachse (4a) drehbar gelagert ist, die parallel zur Bohrfutterachse (1a) verläuft und daß die Feder (7) als eine konzentrisch zur Exzenterachse angeordnete Wendelfeder ausgebildet ist.

6.  Werkzeug nach Anspruch 1 für ein Brückenwerkzeug, dadurch gekennzeichnet, daß der Exzenter als eine zweiarmige Wippe (10) ausgebildet ist, an deren einem, radial nach außen weisenden Arm (10a) die Schneide (3) angeordnet ist.

7. Werkzeug nach Anspruch 6, dadurch gekennzeichnet, daß an dem der Schneide (3) gegenüberliegenden Arm (10b) der Wippe (10) die Feder (11) angreift.

8. Werkzeug nach Anspruch 6 und 7, dadurch gekennzeichnet, daß die Feder eine Schraubendruckfeder (11) ist, die in einer senkrecht zur Drehachse (1a) des Bohrfutters (1) verlaufenden Bohrung (12) angeordnet ist und die über einen in der Bohrung verschiebbaren Bolzen (13) auf die Wippe (10) drückt.

9. Werkzeug nach Anspruch 8, dadurch gekennzeichnet, daß die Bohrung (12) in einer Werkzeugfläche (14) endet, die als Anschlag für die Wippe (10) bei der Schruppbearbeitung dient.

10. Werkzeug nach Anspruch 8 und 9, dadurch gekennzeichnet, daß der Werkzeugfläche (14) gegenüber eine verstellbare Anschlagschraube (15) vorgesehen ist.

11. Werkzeug nach Anspruch 1, mit mindestens zwei gleichmäßig auf den Umfang verteilten Schneiden (118, 133), dadurch gekennzeichnet, daß die die Schlichtbearbeitung übernehmende Schneide (133) in ihrer Lage (133′) beim Schruppvorgang etwas radial nach innen versetzt ist.

12. Werkzeug nach Anspruch 11, dadurch gekennzeichnet, daß der radial äußerste Teil (150) der Schneideneckenrundung der radial nach innen versetzten Schneide (133) abgekappt ist, so daß die Schlichtschneide (134) in eine gerade und gegenüber der Vorschubrichtung (153) beim Schlichten leicht nach hinten geneigte Nebenschneide (135) übergeht.

## Claims

1. A tool arrangement for the machining of cylindrical surfaces on workpieces, particularly for drilling out, with, disposed eccentrically of the axis of rotation (1a) of a tool holder, particularly a drilling chuck (1), an eccentric member (4) which carries a machining tool (2) and of which the cutting edge (3) can by adjustment of the eccentric member between two stops (5, 6; 15, 14) be moved into a preliminary machining position and - upon retraction of the tool arrangement - into a finishing position, the eccentric member being initially tensioned by a spring (7, 11) with a torque in the direction of one of the two abutments, characterised in that the one abutment (5, 15) corresponds to the finishing position of the cutting edge (3, 33) and in that the torque of the spring (7, 11) is greater than the counter-torque occurring during finishing but is less than that which occurs during preliminary machining.

2. A tool according to Claim 1, characterised in that the force of the spring (7, 11) is adjustable.

3. A tool according to Claims 1 or 2, characterised in that the position of the abutments (5, 6, 15) for the eccentric member (4, 10) is adjustable.

4. A tool according to Claims 1 to 3, characterised in that the abutments (5, 6) consist of set screws (8, 9) which are screwed into screw-threaded bores in the drill chuck (1).

5. A tool according to Claim 1, characterised in that the eccentric member (4) is mounted to rotate about an eccentric axis (4a) which extends parallel with the drill chuck axis (1a) and in that the spring (7) is constructed as a spiral spring disposed concentrically w;th the eccentric axis.

6. A tool according to Claim 1 for a bridging tool, characterised in that the eccentric member is constructed as a two-armed rocker (10) on one arm (10a) of which, directed radially outwardly, the cutting edge (3) is disposed.

7. A tool according to Claim 6, characterised in that the spring (11) engages that arm (10b) of the rocker (10) which is opposite the cutting edge (3).

8. A tool according to Claim 6 and 7, characterised in that the spring is a coiled thrust spring (11) which is disposed in a bore (12) extending at right-angles to the axis of rotation (1a) of the drill chuck (1) and presses on the rocker (10) via a pin (13) which is adapted for displacement in the bore.

9. A tool according to Claim 8, characterised in that the bore (12) ends in a tool face (14) which serves as an abutment for the rocker (10) during rough finishing.

10. A tool according to Claim 8 and 9, characterised in that an adjustable abutment screw (15) is provided opposite the tool surface (14).

11. A tool according to Claim 1 having at least two cutting edges (118, 133) which are evenly distributed over the periphery, characterised in that the cutting edge (133) which takes over the finishing process is offset somewhat radially inwardly in its position (133') during the roughing stage.

12. A tool according to Claim 11, characterised in that the radially outermost part (150) of the rounded part of the cutting edge corner of the radially inwardly offset cutting edge (133) is capped so that the finishing cutting edge (134) merges into a straight cutting edge (135) which is however inclined slightly rearwardly during finishing, in relation to the direction of feed (153).

**Revendications**

1. Outillage pour la réalisation de surfaces cylindriques, notamment de perçages, avec une broche porte-outil à axe de rotation (1a) excentré, en particulier un mandrin de perçage (1), l'excentrique (4) portant un outil (2) dont l'arête tranchante, par action de l'excentrique est conduit entre deux butées ( 5, 6; 15, 14) dans une position d'usinage, par recul de l'outillage, dans une position de finition, dans lequel l'excentrique est rappelé par un ressort (7, 11) avec un moment de rotation en direction de l'une des deux butées caractérisé en que l'une des butées (5, 15) correspond à la position de finition de l'arête coupante (3, 33) et que le moment de rotation du ressort (7, 11) est plus grand lors de la finition mais plus petit que le moment de rotation lors de l'usinage.

2. Outillage selon la revendication 1, caractérisé en ce que la force du ressort (7, 11) est réglable.

3. Outillage selon l'une des revendications 1 ou 2, caractérisé en ce que la position des butées (5, 6, 15) de l'excentrique (4, 10) est réglable.

4. Outillage selon l'une des revendications 1 à 3, caractérisé en ce que les butées (5, 6) sont constituées par des vis (8, 9) vissées dans des taraudages du mandrin de perçage (1).

5. Outillage selon la revendication 1, caractérisé en ce que l'excentrique (4) est monté pivotant sur un axe (4a) d'excentration qui s'étend parallèlement à l'axe du mandrin de perçage (1a) et en ce que le ressort (7) est constitué par un ressort en spirale concentrique à l'axe d'excentration.

6. Outillage selon la revendication 1, pour un outil à pont, caractérisé en ce que l'excentrique est constitué par un levier à deux bras (10) sur l'un desquels (10a) est monté un bras extérieur radial portant l'arête coupante (3).

7. Outillage selon la revendication 6, caractérisé en ce que le ressort (11) porte contre la partie inférieure du bras (10b) du levier (10).

8. Outillage selon l'une des revendications 6 ou 7, caractérisé en ce que le ressort est un ressort à vis de pression (11), qui s'étend dans un alésage (12) perpendiculaire à l'axe de rotation (1a) du mandrin de perçage (1) et en ce qu'une cheville (13) amovible dans l'alésage appuie sur le levier (10).

9. Outillage selon la revendication 8, caractérisé en ce que l'alésage (12) débouche dans une surface (14) de l'outillage, ladite surface servant de butée pour le levier (10) durant le dégrossissage.

10. Outillage selon les revendications 8 et 9, caractérisé en ce qu'une butée à vis réglable (15) est prévue en regard de la surface (14).

11. Outillage selon la revendication 1, comprenant au moins deux parties périphériques coupantes (118, 133) de mêmes dimensions, caractérisé en ce que la partie coupante de finition (133) dans sa position (133'), est déplacée légèrement radialement lors du mouvement avant de dégrossissage.

12. Outillage selon la revendication 11, caractérisé en ce que la partie radiale la plus extérieure (150) de l'angle arrondi de coupe de l'arête coupante (133) est coupée de sorte que l'arête de surfaçage (134) s'étende dans la direction d'avance (153) et se déplace légèrement derrière l'arête auxiliaire (135).

Fig.1

Fig.2

Fig.3

Fig. 4

Fig. 5

Fig. 6

Fig. 7

## Fig. 8

## Fig. 9